# EUROPEAN PATENT APPLICATION

(11) **EP 4 755 745 A1**
(43) Date of publication of application: **10.06.2026**
(21) Application number: 25212143.9
(22) Date of filing: 29.10.2025
(51) Int. Cl.: B60W 30/18, B60W 30/14, B60W 30/16

(54) **VEHICLE DRIVING ASSISTANCE APPARATUS**

(30) Priority: 05.12.2024 JP 2024212432
(71) Applicant: TOYOTA JIDOSHA KABUSHIKI KAISHA, Toyota-shi Aichi 471-8571 (JP)
(72) Inventor: OTAKE, Hirotada, TOYOTA-SHI, AICHI, 471-8571 (JP)
(74) Representative: Cabinet Beau de Loménie

(57) **Abstract**

A vehicle driving assistance apparatus (10) executes a first driving assistance control of causing a host vehicle (100) to travel by autonomously repeating powering and coasting of the host vehicle (100) alternately such that a traveling speed of the host vehicle (100) is maintained within a range between target upper and lower limit speeds. The apparatus (10) sets a speed obtained by adding a predetermined upper limit variation amount to a set vehicle speed as the target upper limit speed, and sets a speed obtained by subtracting a predetermined lower limit variation amount from the set vehicle speed as the target lower limit speed. When the target lower limit speed is lower than a legal minimum speed during execution of the first driving assistance control, the apparatus (10) changes the predetermined lower limit variation amount such that the target lower limit speed is equal to or higher than the legal minimum speed.

## Description

### BACKGROUND

### Field

The present invention relates to a vehicle driving assistance apparatus.

### Description of the related art

There is known a vehicle driving assistance apparatus which executes a driving assistance control of causing a host vehicle to travel by autonomously performing acceleration and deceleration of the host vehicle such that a host vehicle speed is maintained at a set vehicle speed. Here, the host vehicle speed is a traveling speed of the host vehicle. Further, the set vehicle speed is a speed set as a target value of the host vehicle speed by a driver of the host vehicle.

As such a vehicle driving assistance apparatus, there is also known a vehicle driving assistance apparatus which change the set vehicle speed to a speed equal to or higher than a legal minimum speed when the set vehicle speed is lower than the legal minimum speed (for example, see International Publication WO2013/69130).

Meanwhile, there is known a vehicle driving assistance apparatus which executes a driving assistance control of causing a host vehicle to travel by autonomously alternately repeating powering and coasting of the host vehicle such that the host vehicle speed is maintained within a predetermined range. Also, as such a vehicle driving assistance apparatus, there is known a vehicle driving assistance apparatus which sets a value obtained by adding a predetermined upper limit variation amount to the set vehicle speed as an upper limit of the predetermined range, and a value obtained by subtracting a predetermined lower limit variation amount from the set vehicle speed as a lower limit of the predetermined range. In such a vehicle driving assistance apparatus, even if the set vehicle speed is changed to a speed equal to or higher than the legal minimum speed when the set vehicle speed is lower than the legal minimum speed, there is a possibility that the host vehicle speed temporarily becomes lower than the legal minimum speed when the host vehicle coasts.

### SUMMARY

An object of the present invention is to provide a vehicle driving assistance apparatus capable of preventing the traveling speed of the host vehicle from temporarily becoming lower than the legal minimum speed when executing a driving assistance control of causing the host vehicle to coast.

According to the present invention, a vehicle driving assistance apparatus comprises an electronic control unit which executes a first driving assistance control of causing a host vehicle to travel by autonomously repeating powering and coasting of the host vehicle alternately such that a traveling speed of the host vehicle is maintained within a range between a target upper limit speed and a target lower limit speed. The electronic control unit is configured to set a speed obtained by adding a predetermined upper limit variation amount to a set vehicle speed as the target upper limit speed, the set vehicle speed being set as a target value of the traveling speed of the host vehicle, and set a speed obtained by subtracting a predetermined lower limit variation amount from the set vehicle speed as the target lower limit speed. Further, the electronic control unit is configured to, when the target lower limit speed is lower than a legal minimum speed applied to the host vehicle during execution of the first driving assistance control, change the predetermined lower limit variation amount such that the target lower limit speed is equal to or higher than the legal minimum speed.

According to the present invention, when the target lower limit speed is lower than the legal minimum speed, the target lower limit speed is changed to a speed equal to or higher than the legal minimum speed. Therefore, it is possible to prevent the traveling speed of the host vehicle from temporarily becoming lower than the legal minimum speed when the first driving assistance control which is the driving assistance control of causing the host vehicle to coast is executed.

In the vehicle driving assistance apparatus according to an aspect of the present invention, the electronic control unit may be configured to, when a difference between the target upper limit speed and the target lower limit speed set by the changed predetermined lower limit variation amount is smaller than a predetermined value, cancel the first driving assistance control, and execute a second driving assistance control of causing the host vehicle to travel by autonomously performing acceleration and deceleration of the host vehicle such that the traveling speed of the host vehicle is maintained at the set vehicle speed or a distance between the host vehicle and a preceding vehicle is maintained at a predetermined distance.

When the difference between the target lower limit speed and the target upper limit speed is small, a distance for which the host vehicle can be kept coasting is short, and rather, energy efficiency of causing the host vehicle to travel may be reduced. According to this aspect of the present invention, when the difference between the target lower limit speed and the target upper limit speed is smaller than the predetermined value, the first driving assistance control is terminated. Therefore, it is possible to suppress a reduction in the energy efficiency of causing the host vehicle to travel.

In the vehicle driving assistance apparatus according to another aspect of the present invention, the electronic control unit may be configured to, when a difference between the target upper limit speed and the target lower limit speed set by the changed predetermined lower limit variation amount is smaller than a predetermined value, change the predetermined upper limit variation amount such that the difference is equal to or greater than the predetermined value within a range in which the target upper limit speed is maintained at a speed equal to or lower than a legal maximum speed.

As described above, when the difference between the target lower limit speed and the target upper limit speed is small, a distance for which the host vehicle can be kept coasting becomes short, and rather, energy efficiency of causing the host vehicle to travel may be reduced. According to this aspect of the present invention, when the difference between the target lower limit speed and the target upper limit speed is smaller than the predetermined value, the difference is increased. Therefore, it is possible to suppress a reduction in the energy efficiency of causing the host vehicle to travel.

In the vehicle driving assistance apparatus according to further another aspect of the present invention, the electronic control unit may be configured to, when a traveling speed of a preceding vehicle is lower than the set vehicle speed, and a value obtained by subtracting the target lower limit speed set by the changed predetermined lower limit variation amount from the traveling speed of the preceding vehicle is smaller than a predetermined value, cancel the first driving assistance control, and execute a second driving assistance control of causing the host vehicle to travel by autonomously performing acceleration and deceleration of the host vehicle such that the traveling speed of the host vehicle is maintained at the set vehicle speed or a distance between the host vehicle and the preceding vehicle is maintained at a predetermined distance.

When the difference between the target lower limit speed and the traveling speed of the preceding vehicle is small, a distance for which the host vehicle can be kept coasting becomes short, and rather, energy efficiency of causing the host vehicle to travel may be reduced. According to this aspect of the present invention, when the difference between the target lower limit speed and the traveling speed of the preceding vehicle is smaller than the predetermined value, the first driving assistance control is terminated. Therefore, it is possible to suppress a reduction in the energy efficiency of causing the host vehicle to travel.

In the vehicle driving assistance apparatus according to further another aspect of the present invention, the electronic control unit may be configured to, when a traveling speed of a preceding vehicle is lower than an average value of the traveling speed of the host vehicle realized by the first driving assistance control, set a value obtained by adding one-half of a sum of the predetermined upper limit variation amount and the predetermined lower limit variation amount to the traveling speed of the preceding vehicle as the target upper limit speed, and set a value obtained by subtracting one-half of the sum from the traveling speed of the preceding vehicle as the target lower limit speed. Further, the electronic control unit may be configured to change the target lower limit speed such that the target lower limit speed is equal to or higher than the legal minimum speed when the traveling speed of the preceding vehicle is lower than the average value and the target lower limit speed is lower than the legal minimum speed during execution of the first driving assistance control. Furthermore, the electronic control unit is configured to, when a value obtained by subtracting the changed target lower limit speed from the target upper limit speed is smaller than a predetermined value, cancel the first driving assistance control, and execute a second driving assistance control of causing the host vehicle to travel by autonomously performing acceleration and deceleration of the host vehicle such that the traveling speed of the host vehicle is maintained at the set vehicle speed or a distance between the host vehicle and the preceding vehicle is maintained at a predetermined distance.

As described above, when the difference between the target lower limit speed and the target upper limit speed is small, a distance for which the host vehicle can be kept coasting becomes short, and rather, energy efficiency of causing the host vehicle to travel may be reduced. According to this aspect of the present invention, when the difference between the target lower limit speed and the target upper limit speed is smaller than the predetermined value, the first driving assistance control is terminated. Therefore, it is possible to suppress a reduction in the energy efficiency of causing the host vehicle to travel.

In the vehicle driving assistance apparatus according to further another aspect of the present invention, the electronic control unit may be configured to determine a variation amount used to change the predetermined lower limit variation amount based on the legal minimum speed acquired from information on the legal minimum speed during execution of the first driving assistance control, the information on the legal minimum speed being included in information on a road on which the host vehicle travels.

According to this aspect of the present invention, the predetermined lower limit variation amount is changed based on the legal minimum speed acquired from the information on the legal minimum speed included in the information on the road on which the host vehicle travels. Therefore, it is possible to more reliably suppress the host vehicle speed from temporarily becoming lower than the legal minimum speed.

Elements of the present invention are not limited to elements of embodiments and modified examples of the present invention described with reference to the drawings. The other objects, features and accompanied advantages of the present invention can be easily understood from the embodiments and the modified examples of the present invention.

### BRIEF DESCRIPTION OF THE DRAWINGS

FIG. 1 is a diagram showing a vehicle driving assistance apparatus according to an embodiment of the present invention.
FIG. 2 is a diagram showing a situation where a preceding vehicle is present.
FIG. 3 is a flowchart showing a routine executed by the vehicle driving assistance apparatus according to the embodiment of the present invention.
FIG. 4 is a flowchart showing a routine executed by the vehicle driving assistance apparatus according to the embodiment of the present invention.
FIG. 5 is a flowchart showing a routine executed by the vehicle driving assistance apparatus according to the embodiment of the present invention.
FIG. 6 is a time chart for explaining a control of a traveling speed of a host vehicle when a target lower limit speed is changed and a first traveling speed control is continued.
FIG. 7 is a time chart for explaining a control of the traveling speed of the host vehicle when the first traveling speed control is terminated.
FIG. 8 is a flowchart showing a routine executed by the vehicle driving assistance apparatus according to the embodiment of the present invention.
FIG. 9 is a flowchart showing a routine executed by the vehicle driving assistance apparatus according to the embodiment of the present invention.
FIG. 10 is a flowchart showing a routine executed by the vehicle driving assistance apparatus according to the embodiment of the present invention.
FIG. 11 is a flowchart showing a routine executed by the vehicle driving assistance apparatus according to the embodiment of the present invention.
FIG. 12 is a flowchart showing a process as a substitute for processes of a step S810 and etc. in the routine shown in FIG. 8.
FIG. 13 is a flowchart showing a routine executed by the vehicle driving assistance apparatus according to the embodiment of the present invention.
FIG. 14 is a flowchart showing a routine executed by the vehicle driving assistance apparatus according to the embodiment of the present invention.
FIG. 15 is a flowchart showing a routine executed by the vehicle driving assistance apparatus according to the embodiment of the present invention.

### DETAILED DESCRIPTION

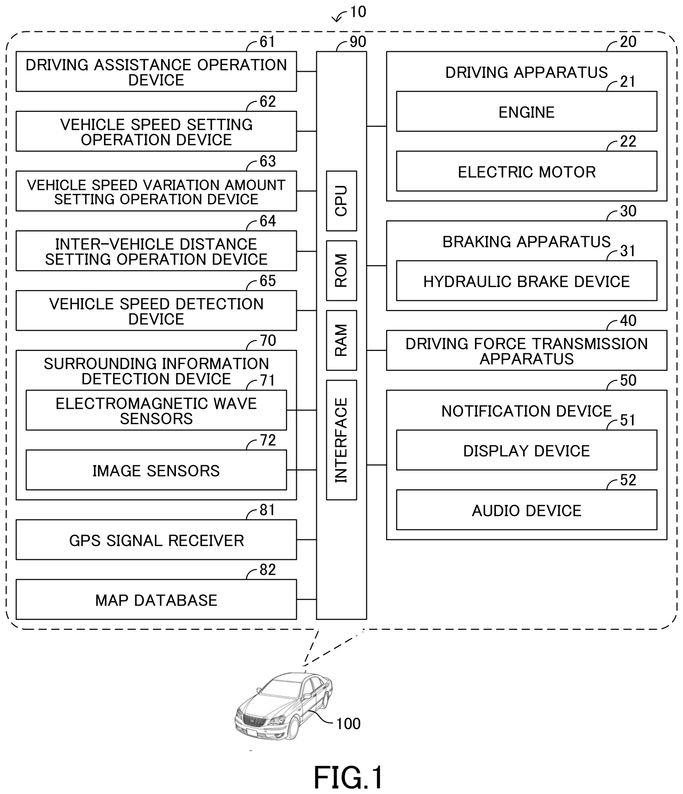

Hereinafter, a vehicle driving assistance apparatus according to an embodiment of the present invention will be described with reference to the drawings. The vehicle driving assistance apparatus 10 according to the embodiment of the present invention is shown in FIG. 1. The vehicle driving assistance apparatus 10 is mounted in a host vehicle 100. Hereinafter, the vehicle driving assistance apparatus 10 will be described using an example in which an operator or user of the host vehicle 100 is a driver of the host vehicle 100 (that is, a person who gets in the host vehicle 100 and drives the host vehicle 100). However, the operator or user of the host vehicle 100 may be a remote operator of the host vehicle 100 (that is, a person who does not get in the host vehicle 100 and drives the host vehicle 100 remotely). It should be noted that, in the following description, the driver of the host vehicle 100 may be simply referred to as "the driver".

As shown in FIG. 1, the vehicle driving assistance apparatus 10 includes an ECU (electronic control unit) 90 as a control device. The ECU 90 includes a microcomputer as a main component. The microcomputer includes a CPU, a computer-readable storage medium, and an interface and the like. The storage medium includes ROM, RAM, and nonvolatile memory and the like. The CPU is configured to realize various functions by executing instructions, programs, or routines stored in the storage medium. In particular, in the present example, the vehicle driving assistance apparatus 10 stores, in the storage medium, programs for realizing various controls executed by the vehicle driving assistance apparatus 10.

It should be noted that, in the present example, the vehicle driving assistance apparatus 10 includes only one ECU 90, but the vehicle driving assistance apparatus 10 may be configured to include a plurality of ECUs and perform the functions of the vehicle driving assistance apparatus 10 described below in a shared manner by the respective ECUs.

Further, the vehicle driving assistance apparatus 10 may be configured to be capable of updating (updating) the programs stored in the storage medium via wireless communication (for example, Internet communication) with external devices.

Furthermore, the vehicle driving assistance apparatus 10 may be applied not only to a vehicle that is driven by manual operation by an operator but also to a vehicle that is driven by autonomous driving.

As shown in FIG. 1, the host vehicle 100 is equipped with a driving apparatus 20, a braking apparatus 30, a driving force transmission apparatus 40, and a notification device 50.

The driving apparatus 20 generates driving force applied to the host vehicle 100 (in particular, driving wheels of the host vehicle 100). In the present example, the driving apparatus 20 includes an internal combustion engine 21 and at least one electric motor 22. The driving apparatus 20 is electrically connected to the ECU 90. The vehicle driving assistance apparatus 10 controls the driving force applied to the host vehicle 100 by controlling the operation of the driving apparatus 20 (that is, the internal combustion engine 21 and the at least one electric motor 22).

The braking apparatus 30 applies braking force to the host vehicle 100 (in particular, wheels of the host vehicle 100). In the present example, the braking apparatus 30 includes a hydraulic brake device 31. The braking apparatus 30 is electrically connected to the ECU 90. The vehicle driving assistance apparatus 10 controls the braking force applied to the host vehicle 100 by controlling the operation of the braking apparatus 30 (more specifically, the operation of the hydraulic brake device 31).

The driving force transmission apparatus 40 transmits the driving force output from the driving apparatus 20 to the driving wheels of the host vehicle 100. The driving force transmission apparatus 40 is, for example, a transmission. The driving force transmission apparatus 40 is electrically connected to the ECU 90. The vehicle driving assistance apparatus 10 establishes a driving force transmission path and transmits the driving force output from the driving apparatus 20 to the driving wheels of the host vehicle 100 by controlling the operation of the driving force transmission apparatus 40. The driving force transmission path is a path that transmits the driving force from the driving apparatus 20 to the driving wheels of the host vehicle 100. Further, the vehicle driving assistance apparatus 10 cuts off the driving force transmission path and prevents the driving force from being transmitted from the driving apparatus 20 to the driving wheels of the host vehicle 100 by controlling the operation of the driving force transmission apparatus 40.

The notification device 50 performs various notifications to the driver. In the present example, the notification device 50 includes a display device 51 and an audio device 52.

The display device 51 displays various images. The display device 51 includes, for example, a display. The display device 51 is electrically connected to the ECU 90. The vehicle driving assistance apparatus 10 displays various images by the display device 51.

The audio device 52 outputs various sounds and/or voices. The audio device 52 includes, for example, a speaker. The audio device 52 is electrically connected to the ECU 90. The vehicle driving assistance apparatus 10 outputs various sounds and/or voices by the audio device 52.

Furthermore, the host vehicle 100 is equipped with a driving assistance operation device 61, a vehicle speed setting operation device 62, a vehicle speed variation amount setting operation device 63, an inter-vehicle distance setting operation device 64, a vehicle speed detection device 65, a surrounding information detection device 70, a GPS signal receiver 81, and a map database 82.

The driving assistance operation device 61 is operated by the driver. The driver requests execution or stop of a driving assistance control described later by operating the driving assistance operation device 61. The driving assistance operation device 61 is electrically connected to the ECU 90. When the driving assistance control is not executed and the driving assistance operation device 61 is operated, the vehicle driving assistance apparatus 10 determines that the execution of the driving assistance control is requested. On the other hand, when the driving assistance control is executed and the driving assistance operation device 61 is operated, the vehicle driving assistance apparatus 10 determines that the stop of the driving assistance control is requested.

The vehicle speed setting operation device 62 is operated by the driver. The driver sets a set vehicle speed Vset used in the driving assistance control described later by operating the vehicle speed setting operation device 62. The set vehicle speed Vset is set by the driver as a target value of a host vehicle speed V1. The host vehicle speed V1 is a traveling speed of the host vehicle 100.

The vehicle speed variation amount setting operation device 63 is operated by the driver. The driver sets a set vehicle speed variation amount WVset used in the driving assistance control described later by operating the vehicle speed variation amount setting operation device 63.

The inter-vehicle distance setting operation device 64 is operated by the driver. The driver sets a set inter-vehicle distance Dset used in the driving assistance control described later by operating the inter-vehicle distance setting operation device 64. In the present example, the driver sets any one of a long distance, a medium distance, and a short distance as the set inter-vehicle distance Dset by operating the inter-vehicle distance setting operation device 64. When the long distance is set as the set inter-vehicle distance Dset, a relatively long distance Dlong is set as the set inter-vehicle distance Dset. When the medium distance is set as the set inter-vehicle distance Dset, a medium distance Dmid is set as the set inter-vehicle distance Dset. When the short distance is set as the set inter-vehicle distance Dset, a relatively short distance Dshort is set. The set inter-vehicle distance Dset is set longer as the host vehicle speed V1 is higher. It should be noted that, when the host vehicle speed V1 is the same, the relatively long distance Dlong is longer than the medium distance Dmid. Further, when the host vehicle speed V1 is the same, the medium distance Dmid is longer than the relatively short distance Dshort.

The vehicle speed detection device 65 detects the host vehicle speed V1. The vehicle speed detection device 65 includes, for example, wheel rotation speed sensors provided at the respective wheels of the host vehicle 100. The vehicle speed detection device 65 is electrically connected to the ECU 90. The vehicle driving assistance apparatus 10 acquires the host vehicle speed V1 by the vehicle speed detection device 65.

The surrounding information detection device 70 detects information about surroundings of the host vehicle 100. In the present example, the surrounding information detection device 70 includes a plurality of electromagnetic wave sensors 71 and a plurality of image sensors 72.

The electromagnetic wave sensors 71 are electrically connected to the ECU 90. The electromagnetic wave sensor 71 is, for example, a radar sensor such as a millimeter wave radar. The vehicle driving assistance apparatus 10 acquires, as surrounding information IS, information (object information IO) on objects present around the host vehicle 100 by the electromagnetic wave sensors 71.

The image sensors 72 are electrically connected to the ECU 90. The image sensor 72 is, for example, a camera sensor. The vehicle driving assistance apparatus 10 acquires, as surrounding information IS, image information IC about surroundings of the host vehicle 100 by the image sensors 72.

The GPS signal receiver 81 receive GPS signals. The GPS signal receiver 81 is electrically connected to the ECU 90. The vehicle driving assistance apparatus 10 receives GPS signals via the GPS signal receiver 81. The vehicle driving assistance apparatus 10 acquires a current position of the host vehicle 100 based on the GPS signals.

The map database 82 stores map information IM. The map database 82 is electrically connected to the ECU 90. The vehicle driving assistance apparatus 10 acquires road information IR based on the current position of the host vehicle 100 and the map information IM. The road information IR is information on a road on which the host vehicle 100 travels.

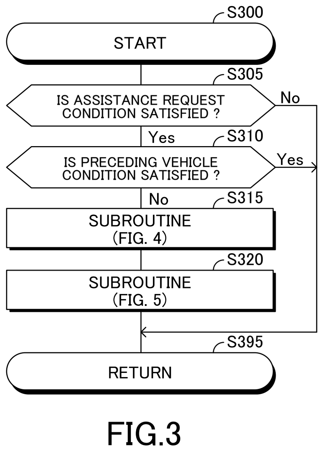

Next, the operation of the vehicle driving assistance apparatus 10 will be described. The vehicle driving assistance apparatus 10 executes a routine shown in FIG. 3 and the like at predetermined time intervals. As a result, when a predetermined condition is satisfied, the vehicle driving assistance apparatus 10 executes the driving assistance control. In the present example, the driving assistance control includes a first driving assistance control and a second driving assistance control.

The first driving assistance control includes a first traveling speed control and a first inter-vehicle distance control.

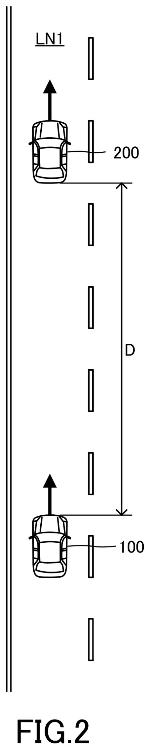

The first traveling speed control is executed when a preceding vehicle 200 is not present. As shown in FIG. 2, the preceding vehicle 200 is another vehicle that travels in a host traveling lane LN1 ahead of the host vehicle 100 and exists within a predetermined distance Dth ahead of the host vehicle 100. The preceding vehicle 200 is detected based on the surrounding information IS.

The first traveling speed control is a control of causing the host vehicle 100 to travel by autonomously alternately repeating powering of the host vehicle 100 and coasting of the host vehicle 100 such that the host vehicle speed V1 is maintained at a speed within a target vehicle speed range RVtgt. In other words, the first traveling speed control is a control of causing the host vehicle 100 to travel by autonomously alternately repeating a powering control and a coasting control such that the host vehicle speed V1 is maintained at a speed within the target vehicle speed range RVtgt.

The powering control is a control of powering the host vehicle 100. When the vehicle driving assistance apparatus 10 executes the powering control, it powers the host vehicle 100 by applying the driving force from the driving apparatus 20 to the host vehicle 100. It should be noted that an optimal powering control may be adopted as the powering control. The optimal powering control is a control of powering the host vehicle 100 by controlling the operation of the driving apparatus 20 such that driving energy efficiency is highest to apply the driving force from the driving apparatus 20 to the host vehicle 100. The driving energy efficiency is energy efficiency when the driving apparatus 20 generates the driving force.

The coasting control is a control of causing the host vehicle 100 to coast. When the vehicle driving assistance apparatus 10 executes the coasting control, it causes the host vehicle 100 to coast by stopping the application of the driving force from the driving apparatus 20 to the host vehicle 100. In the present example, when the vehicle driving assistance apparatus 10 executes the coasting control, it stops the application of the driving force from the driving apparatus 20 to the host vehicle 100 by cutting off the driving force transmission path. As described above, the driving force transmission path is a path for applying the driving force from the driving apparatus 20 to the host vehicle 100. The vehicle driving assistance apparatus 10 cuts off the driving force transmission path by controlling the operation of the driving force transmission apparatus 40.

While the vehicle driving assistance apparatus 10 executes the first traveling speed control, when the host vehicle speed V1 increases due to the execution of the powering control and reaches a target upper limit speed Vtgt_max, the vehicle driving assistance apparatus 10 terminates the powering control and starts the coasting control. The target upper limit speed Vtgt_max is an upper limit of the target vehicle speed range RVtgt. The target upper limit speed Vtgt_max is a value obtained by adding a predetermined upper limit variation amount ΔVmax to the set vehicle speed Vset. In the present example, the predetermined upper limit variation amount ΔVmax is zero, except for exceptions described later. Therefore, in the present example, except for exceptions described later, the set vehicle speed Vset set by the driver is set as the target upper limit speed Vtgt_max (Vtgt_max = Vset).

On the other hand, while the vehicle driving assistance apparatus 10 executes the first traveling speed control, when the host vehicle speed V1 decreases due to the execution of the coasting control and reaches a target lower limit speed Vtgt_min, the vehicle driving assistance apparatus 10 terminates the coasting control and starts the powering control. The target lower limit speed Vtgt_min is a lower limit of the target vehicle speed range RVtgt. The target lower limit speed Vtgt_min is a speed obtained by subtracting a predetermined lower limit variation amount ΔVmin from the set vehicle speed Vset. In the present example, the predetermined lower limit variation amount ΔVmin is the target vehicle speed variation amount WVtgt. Therefore, in the present example, a value obtained by subtracting the target vehicle speed variation amount WVtgt from the target upper limit speed Vtgt_max is set as the target lower limit speed Vtgt_min. Further, except for exceptions described later, the set vehicle speed variation amount WVset set by the driver is set as the target vehicle speed variation amount WVtgt.

The first inter-vehicle distance control is executed when the preceding vehicle 200 is present. The first inter-vehicle distance control is a control of causing the host vehicle 100 to travel by autonomously alternately repeating powering of the host vehicle 100 and coasting of the host vehicle 100 such that an inter-vehicle distance D is maintained at a distance within a target inter-vehicle distance range RDtgt. In other words, the first inter-vehicle distance control is a control of causing the host vehicle 100 to travel by autonomously alternately repeating the powering control and the coasting control such that the inter-vehicle distance D is maintained at a distance within the target inter-vehicle distance range RDtgt.

The inter-vehicle distance D is a distance between the host vehicle 100 and the preceding vehicle 200. The inter-vehicle distance D is acquired based on the surrounding information IS.

**While** the vehicle driving assistance apparatus 10 executes the first inter-vehicle distance control, when the inter-vehicle distance D decreases due to the execution of the powering control and reaches a target lower limit inter-vehicle distance Dtgt_min, the vehicle driving assistance apparatus 10 terminates the powering control and starts the coasting control. The target lower limit inter-vehicle distance Dtgt_min is a lower limit of the target inter-vehicle distance range RDtgt. In the present example, the set inter-vehicle distance Dset set by the driver is set as the target lower limit inter-vehicle distance Dtgt_min (Dtgt_min = Dset).

On the other hand, while the vehicle driving assistance apparatus 10 executes the first inter-vehicle distance control, when the inter-vehicle distance D increases due to the execution of the coasting control and reaches a target upper limit inter-vehicle distance Dtgt_max, the vehicle driving assistance apparatus 10 terminates the coasting control and starts the powering control. The target upper limit inter-vehicle distance Dtgt_max is an upper limit of the target inter-vehicle distance range RDtgt. In the present example, a value obtained by adding a target inter-vehicle distance variation amount WDtgt to the target lower limit inter-vehicle distance Dtgt_min is set as the target upper limit inter-vehicle distance Dtgt_max (Dtgt_max = Dtgt_min + WDtgt). In the present example, the target inter-vehicle distance variation amount WDtgt is set according to the set inter-vehicle distance Dset and the host vehicle speed V1.

It should be noted that, while the powering control is executed, when the host vehicle speed V1 reaches the target upper limit speed Vtgt_max before the inter-vehicle distance D reaches the target lower limit inter-vehicle distance Dtgt_min, the powering control is continued such that the host vehicle speed V1 is maintained at the target upper limit speed Vtgt_max. Further, while the coasting control is executed, when the host vehicle speed V1 reaches the target lower limit speed Vtgt_min before the inter-vehicle distance D reaches the target upper limit inter-vehicle distance Dtgt_max, the coasting control is terminated, and the powering control is executed such that the host vehicle speed V1 is maintained at the target lower limit speed Vtgt_min.

Therefore, it can be said that the first inter-vehicle distance control is also a control of causing the host vehicle 100 to travel by autonomously alternately repeating the powering and coasting of the host vehicle 100 such that the host vehicle speed V1 is maintained at a speed within a range between the target upper limit speed Vtgt_max and the target lower limit speed Vtgt_min.

The second driving assistance control includes a second traveling speed control and a second inter-vehicle distance control.

The second traveling speed control is executed when the preceding vehicle 200 is not present. The second traveling speed control is a control of causing the host vehicle 100 to travel by autonomously performing acceleration and deceleration of the host vehicle 100 such that the host vehicle speed V1 is maintained at the set vehicle speed Vset.

The second inter-vehicle distance control is executed when the preceding vehicle 200 is present. The second inter-vehicle distance control is a control of causing the host vehicle 100 to travel by autonomously performing acceleration and deceleration of the host vehicle 100 such that the inter-vehicle distance D is maintained at the set inter-vehicle distance Dset.

When a predetermined timing arrives, the vehicle driving assistance apparatus 10 starts a process from a step S300 of the routine shown in FIG. 3. Then, the vehicle driving assistance apparatus 10 proceeds with the process to a step S305 to determine whether an assistance request condition C1 is satisfied. The assistance request condition C1 is satisfied when execution of the driving assistance control is requested.

When the vehicle driving assistance apparatus 10 determines "Yes" at the step S305, the vehicle driving assistance apparatus 10 proceeds with the process to a step S310 to determine whether a preceding vehicle condition C2 is satisfied. The preceding vehicle condition C2 is satisfied when the preceding vehicle 200 is present.

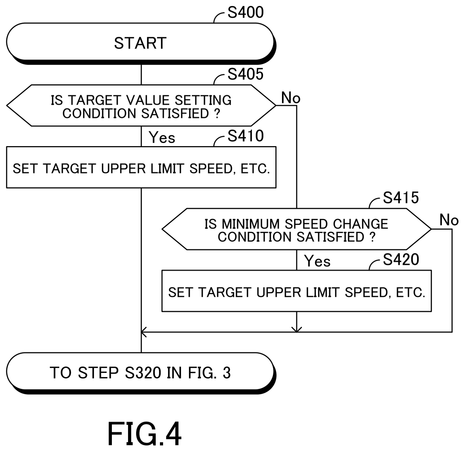

When the vehicle driving assistance apparatus 10 determines "No" at the step S310, the vehicle driving assistance apparatus 10 proceeds with the process to a step S315 to execute a routine shown in FIG. 4. Therefore, when the vehicle driving assistance apparatus 10 proceeds with the process to the step S315, the vehicle driving assistance apparatus 10 starts the process from a step S400 of the routine shown in FIG. 4. Then, the vehicle driving assistance apparatus 10 proceeds with the process to a step S405 to determine whether a target value setting condition C3 is satisfied.

The target value setting condition C3 is satisfied when the driver sets or changes the set vehicle speed Vset by operating the vehicle speed setting operation device 62. Furthermore, the target value setting condition C3 is also satisfied when the driver sets or changes the set vehicle speed variation amount WVset by operating the vehicle speed variation amount setting operation device 63.

When the vehicle driving assistance apparatus 10 determines "Yes" at the step S405, the vehicle driving assistance apparatus 10 proceeds with the process to a step S410 to set the target upper limit speed Vtgt_max, the target vehicle speed variation amount WVtgt, and the target lower limit speed Vtgt_min.

At the step S410, the set vehicle speed Vset set by the driver is set as the target upper limit speed Vtgt_max (Vtgt_max = Vset). Further, the set vehicle speed variation amount WVset set by the driver is set as the target vehicle speed variation amount WVtgt. Further, a value obtained by subtracting the target vehicle speed variation amount WVtgt from the target upper limit speed Vtgt_max is set as the target lower limit speed Vtgt_min (Vtgt_min = Vtgt_max - WVtgt).

Next, the vehicle driving assistance apparatus 10 proceeds with the process to a step S320 of the routine shown in FIG. 3.

On the other hand, when the vehicle driving assistance apparatus 10 determines "No" at the step S405, the vehicle driving assistance apparatus 10 proceeds with the process to a step S415 to determine whether a minimum speed change condition C4 is satisfied.

The minimum speed change condition C4 is satisfied when a legal minimum speed Vlaw_min is changed. The legal minimum speed Vlaw_min is a speed legally required as a minimum traveling speed of the vehicle.

The legal minimum speed Vlaw_min is acquired from information on the legal minimum speed Vlaw_min included in information on a road on which the host vehicle 100 travels. The information on the road on which the host vehicle 100 travels is at least one of the road information IR, the surrounding information IS (in particular, the image information IC), and the destination information of the ECU 90 (that is, information on the destination of the host vehicle 100). Therefore, the legal minimum speed Vlaw_min is acquired from the information on the legal minimum speed included in the road information IR. Alternatively, the legal minimum speed Vlaw_min is acquired from information on a road sign indicating the legal minimum speed obtained from the surrounding information IS (in particular, the image information IC). Alternatively, the legal minimum speed Vlaw_min is acquired from information on the legal minimum speed set in the destination of the ECU 90 obtained from the destination information of the ECU 90. It should be noted that, as the legal minimum speed Vlaw_min, the highest one among the legal minimum speeds respectively acquired from the road information IR, the road sign information, and the destination information of the ECU 90 may be adopted.

When the vehicle driving assistance apparatus 10 determines "Yes" at the step S415, the vehicle driving assistance apparatus 10 proceeds with the process to a step S420 to set the target upper limit speed Vtgt_max, the target vehicle speed variation amount WVtgt, and the target lower limit speed Vtgt_min.

At the step S420, the current set vehicle speed Vset is set as the target upper limit speed Vtgt_max (Vtgt_max = Vset). Further, the current set vehicle speed variation amount WVset is set as the target vehicle speed variation amount WVtgt. Furthermore, a value obtained by subtracting the target vehicle speed variation amount WVtgt from the target upper limit speed Vtgt_max is set as the target lower limit speed Vtgt_min (Vtgt_min = Vtgt_max - WVtgt).

Next, the vehicle driving assistance apparatus 10 proceeds with the process to the step S320 of the routine shown in FIG. 3.

On the other hand, when the vehicle driving assistance apparatus 10 determines "No" at the step S415, the vehicle driving assistance apparatus 10 proceeds with the process directly to the step S320 of the routine shown in FIG. 3.

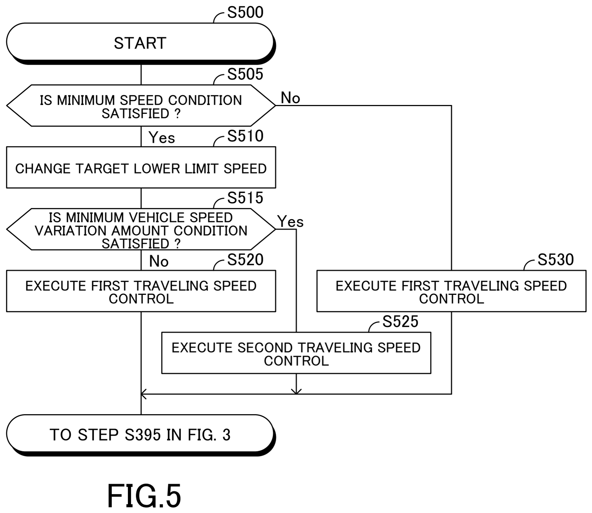

When the vehicle driving assistance apparatus 10 proceeds with the process to the step S320, the vehicle driving assistance apparatus 10 executes the routine shown in FIG. 5. Therefore, when the vehicle driving assistance apparatus 10 proceeds with the process to the step S320, the vehicle driving assistance apparatus 10 starts the process from a step S500 of the routine shown in FIG. 5. Then, the vehicle driving assistance apparatus 10 proceeds with the process to a step S505 to determine whether a minimum speed condition C5 is satisfied. The minimum speed condition C5 is satisfied when the target lower limit speed Vtgt_min is lower than the legal minimum speed Vlaw_min.

When the vehicle driving assistance apparatus 10 determines "Yes" at the step S505, the vehicle driving assistance apparatus 10 proceeds with the process to a step S510 to change the target lower limit speed Vtgt_min to a speed equal to or higher than the legal minimum speed Vlaw_min. In the present example, the legal minimum speed Vlaw_min is set as the target lower limit speed Vtgt_min.

As described above, in the present example, when the target lower limit speed Vtgt_min is lower than the legal minimum speed Vlaw_min applied to the host vehicle 100 during execution of the first traveling speed control, the predetermined lower limit variation amount ΔVmin is changed such that the target lower limit speed Vtgt_min is equal to or higher than the legal minimum speed Vlaw_min.

Further, as described above, the legal minimum speed Vlaw_min is acquired from the information on the legal minimum speed included in the information on the road on which the host vehicle 100 travels. Therefore, in the present example, a change amount of the predetermined lower limit variation amount ΔVmin is determined based on the legal minimum speed Vlaw_min acquired from the information on the legal minimum speed included in the information on the road on which the host vehicle 100 travels, during execution of the first traveling speed control.

It should be noted that, at the step S510, a value obtained by adding a predetermined value ΔV to the legal minimum speed Vlaw_min may be set as the target lower limit speed Vtgt_min.

The predetermined value ΔV is set to an appropriate value for setting the target lower limit speed Vtgt_min such that the powering control is started at a timing when the host vehicle speed V1 can be increased without falling below the legal minimum speed Vlaw_min. In particular, the predetermined value ΔV is set to a minimum value of such appropriate values. The predetermined value ΔV is set to a larger value as the acceleration capability of the vehicle becomes smaller. Also, the predetermined value ΔV is set to a larger value as the acceleration responsiveness of the vehicle becomes lower. It should be noted that the acceleration capability of the vehicle is larger as the acceleration of the vehicle realized by the powering control becomes higher. Also, the acceleration responsiveness of the vehicle is higher as a time from the start of the powering control to actual start of acceleration of the vehicle becomes shorter.

It should be noted that, at the step S510, the set vehicle speed Vset is not changed. Therefore, the target upper limit speed Vtgt_max is also not changed.

Next, the vehicle driving assistance apparatus 10 proceeds with the process to a step S515 to determine whether a minimum vehicle speed variation amount condition C6 is satisfied.

The minimum vehicle speed variation amount condition C6 is satisfied when the target vehicle speed variation amount WVtgt is smaller than a minimum vehicle speed variation amount WVmin. In other words, the minimum vehicle speed variation amount condition C6 is satisfied when a difference between the target lower limit speed Vtgt_min and the target upper limit speed Vtgt_max is smaller than the minimum vehicle speed variation amount WVmin. The minimum vehicle speed variation amount WVmin is a minimum value of the target vehicle speed variation amount WVtgt that allows an improvement in the driving energy efficiency by a predetermined value or more through execution of the first driving assistance control. Also, the minimum vehicle speed variation amount WVmin is determined according to vehicle characteristics (in particular, driving energy efficiency characteristics of the driving apparatus), an average traveling speed of the vehicle, and a gradient of the road on which the vehicle travels and the like.

It should be noted that, during execution of the first driving assistance control, the larger the target vehicle speed variation amount WVtgt, the higher the driving energy efficiency tends to be. Also, when the target vehicle speed variation amount WVtgt is too small during execution of the first driving assistance control, the driving energy efficiency may be lower than the driving energy efficiency realized by the second driving assistance control. Therefore, the vehicle driving assistance apparatus 10 is configured to determine whether the minimum vehicle speed variation amount condition C6 is satisfied, in order to ensure high driving energy efficiency during execution of the first driving assistance control.

When the vehicle driving assistance apparatus 10 determines "No" at the step S515, the vehicle driving assistance apparatus 10 proceeds with the process to a step S520 to execute or continue the first traveling speed control. At this time, if the second traveling speed control is executed, the second traveling speed control is cancelled and the first traveling speed control is executed. Next, the vehicle driving assistance apparatus 10 proceeds with the process to a step S395 of the routine shown in FIG. 3 to terminate the process of this routine once.

It should be noted that the vehicle driving assistance apparatus 10 may be configured to perform a continuation notification when the first traveling speed control is continued at the step S520. In the present example, the continuation notification is a notification to inform the driver that the first traveling speed control is continued but there is a possibility that the host vehicle speed V1 becomes lower than the legal minimum speed Vlaw_min. Alternatively, the continuation notification is a notification to urge the driver to pay attention such that the host vehicle speed V1 does not become lower than the legal minimum speed Vlaw_min since the first traveling speed control is continued and there is a possibility that the host vehicle speed V1 becomes lower than the legal minimum speed Vlaw_min. Alternatively, the continuation notification is a notification to propose to the driver to change the set vehicle speed Vset or the set vehicle speed variation amount WVset since the first traveling speed control is continued and there is a possibility that the host vehicle speed V1 becomes lower than the legal minimum speed Vlaw_min.

The continuation notification is realized by the notification device 50. More specifically, the continuation notification is realized by displaying a predetermined image by the display device 51 and/or by outputting a predetermined voice by the audio device 52.

On the other hand, when the vehicle driving assistance apparatus 10 determines "Yes" at the step S515, the vehicle driving assistance apparatus 10 proceeds with the process to a step S525 to execute or continue the second traveling speed control. At this time, if the first traveling speed control is executed, the first traveling speed control is cancelled and the second traveling speed control is executed. Next, the vehicle driving assistance apparatus 10 proceeds with the process to the step S395 of the routine shown in FIG. 3 to terminate the process of this routine once.

As described above, in the present example, when a difference (target vehicle speed variation amount WVtgt) between the target lower limit speed Vtgt_min set based on the changed predetermined lower limit variation amount ΔVmin and the target upper limit speed Vtgt_max is smaller than a predetermined value (minimum vehicle speed variation amount WVmin), the first traveling speed control is cancelled and the second traveling speed control is executed.

It should be noted that the vehicle driving assistance apparatus 10 may be configured to perform a cancel notification when the first traveling speed control is cancelled at the step S525. In the present example, the cancel notification is a notification to inform the driver that the first traveling speed control is cancelled but, in order to execute the first traveling speed control, it is necessary to change the set vehicle speed Vset or the set vehicle speed variation amount WVset. It should be noted that the cancel notification may also be a notification only to inform the driver that the first traveling speed control is cancelled.

The cancel notification is realized by the notification device 50. More specifically, the cancel notification is realized by displaying a predetermined image by the display device 51 and/or by outputting a predetermined voice by the audio device 52.

When the vehicle driving assistance apparatus 10 determines "No" at the step S505, the vehicle driving assistance apparatus 10 proceeds with the process to a step S530 to execute or continue the first traveling speed control. At this time, if the second traveling speed control is executed, the second traveling speed control is cancelled and the first traveling speed control is executed. Next, the vehicle driving assistance apparatus 10 proceeds with the process to the step S395 of the routine shown in FIG. 3 to terminate the process of this routine once.

Further, when the vehicle driving assistance apparatus 10 determines "No" at the step S305 of the routine shown in FIG. 3, or when the vehicle driving assistance apparatus 10 determines "Yes" at the step S310 of the routine shown in FIG. 3, the vehicle driving assistance apparatus 10 proceeds with the process directly to the step S395 to terminate the process of this routine once.

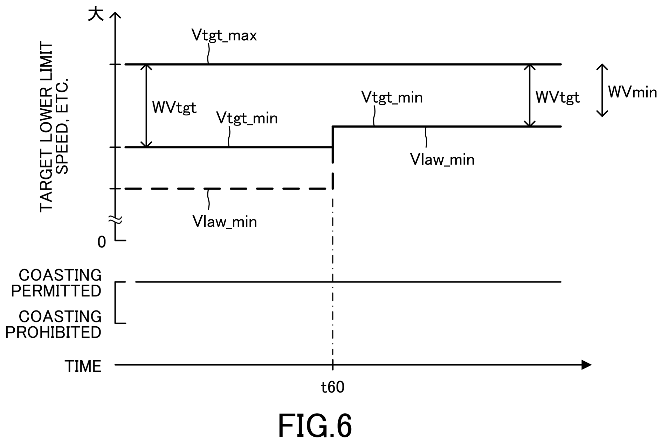

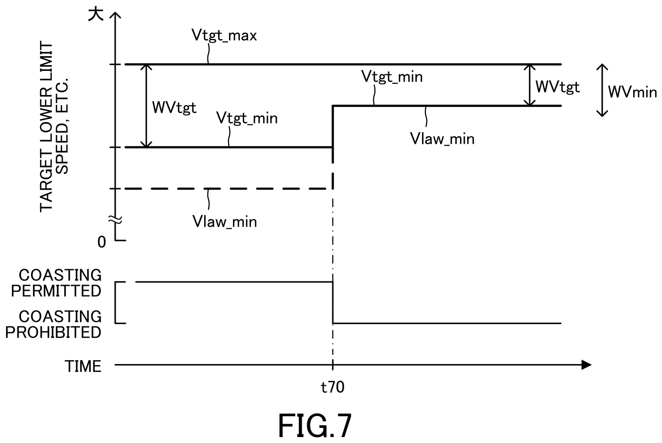

According to the control described above, the host vehicle speed V1 is controlled as shown in FIG. 6 or FIG. 7.

That is, in the example shown in FIG. 6, at a time t60, the legal minimum speed Vlaw_min becomes higher, and as a result, the target lower limit speed Vtgt_min becomes lower than the legal minimum speed Vlaw_min. Therefore, the target lower limit speed Vtgt_min is set to the same speed as the legal minimum speed Vlaw_min. At this time, the target vehicle speed variation amount WVtgt is equal to or greater than the minimum vehicle speed variation amount WVmin. Therefore, the first traveling speed control is continued in a state in which the target lower limit speed Vtgt_min is set to the same speed as the legal minimum speed Vlaw_min. In other words, a state in which coasting of the host vehicle 100 is permitted is continued.

On the other hand, in the example shown in FIG. 7, at a time t70, the legal minimum speed Vlaw_min becomes higher, and as a result, the target lower limit speed Vtgt_min becomes lower than the legal minimum speed Vlaw_min. Therefore, the target lower limit speed Vtgt_min is set to the same speed as the legal minimum speed Vlaw_min. At this time, the target vehicle speed variation amount WVtgt is smaller than the minimum vehicle speed variation amount WVmin. Therefore, the first traveling speed control is cancelled. In other words, coasting of the host vehicle 100 is prohibited.

As described above, according to the vehicle driving assistance apparatus 10, when the target lower limit speed Vtgt_min is lower than the legal minimum speed Vlaw_min, the target lower limit speed Vtgt_min is changed to a speed equal to or higher than the legal minimum speed Vlaw_min. Therefore, when the first driving assistance control of causing the host vehicle 100 to coast is executed, it is possible to prevent the host vehicle speed V1 from temporarily becoming lower than the legal minimum speed Vlaw_min.

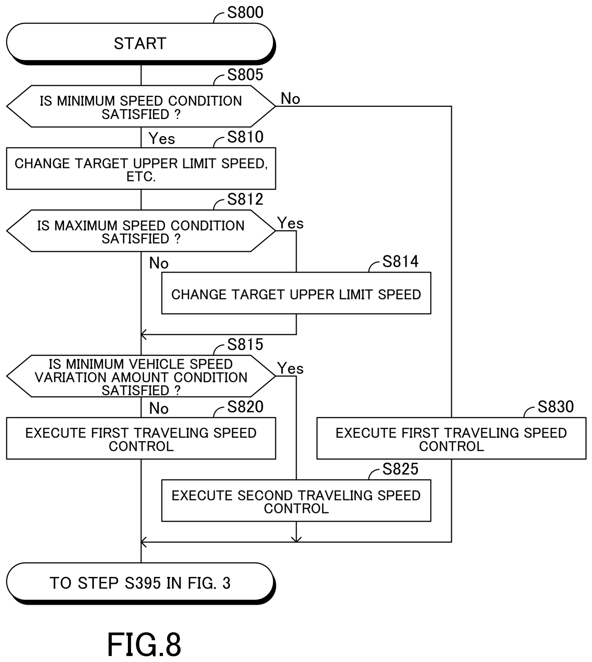

It should be noted that, instead of the routine shown in FIG. 5, the routine shown in FIG. 8 may be executed. In this case, when the vehicle driving assistance apparatus 10 proceeds with the process to the step S320 of the routine shown in FIG. 3, the vehicle driving assistance apparatus 10 starts the process from a step S800 of the routine shown in FIG. 8. Then, the vehicle driving assistance apparatus 10 proceeds with the process to a step S805 to determine whether the minimum speed condition C5 is satisfied.

When the vehicle driving assistance apparatus 10 determines "Yes" at the step S805, the vehicle driving assistance apparatus 10 proceeds with the process to a step S810 to change the target upper limit speed Vtgt_max and the target lower limit speed Vtgt_min. Here, a value obtained by adding the target vehicle speed variation amount WVtgt to the legal minimum speed Vlaw_min is set as the target upper limit speed Vtgt_max (Vtgt_max = Vlaw_min + WVtgt). Then, a value obtained by subtracting the target vehicle speed variation amount WVtgt from the target upper limit speed Vtgt_max is set as the target lower limit speed Vtgt_min (Vtgt_min = Vtgt_max - WVtgt).

It should be noted that, at the step S805, the target upper limit speed Vtgt_max is changed, but the set vehicle speed Vset is not changed.

As described above, also in the present example, when the target lower limit speed Vtgt_min is lower than the legal minimum speed Vlaw_min applied to the host vehicle 100 during execution of the first traveling speed control, the predetermined lower limit variation amount ΔVmin is changed such that the target lower limit speed Vtgt_min is equal to or higher than the legal minimum speed Vlaw_min.

Next, the vehicle driving assistance apparatus 10 proceeds with the process to a step S812 to determine whether a maximum speed condition C7 is satisfied. The maximum speed condition C7 is satisfied when the target upper limit speed Vtgt_max is higher than a legal maximum speed Vlaw_max. The legal maximum speed Vlaw_max is a maximum speed legally regulated as a traveling speed of the vehicle.

The legal maximum speed Vlaw_max is also acquired from information on the legal maximum speed Vlaw_max included in the information on the road on which the host vehicle 100 travels. Here, the information on the road on which the host vehicle 100 travels is at least one of the road information IR and the surrounding information IS (in particular, the image information IC). Therefore, the legal maximum speed Vlaw_max is acquired from information of the legal maximum speed included in the road information IR. Alternatively, the legal maximum speed Vlaw_max is acquired from information of a road sign indicating the legal maximum speed obtained from the surrounding information IS (in particular, the image information IC).

When the vehicle driving assistance apparatus 10 determines "No" at the step S812, the vehicle driving assistance apparatus 10 proceeds with the process directly to a step S815.

On the other hand, when the vehicle driving assistance apparatus 10 determines "Yes" at the step S812, the vehicle driving assistance apparatus 10 proceeds with the process to a step S814 to change the target upper limit speed Vtgt_max. Specifically, the vehicle driving assistance apparatus 10 changes the target upper limit speed Vtgt_max to a speed equal to or lower than the legal maximum speed Vlaw_max. In the present example, the legal maximum speed Vlaw_max is set as the target upper limit speed Vtgt_max. Next, the vehicle driving assistance apparatus 10 proceeds with the process to the step S815.

When the vehicle driving assistance apparatus 10 proceeds with the process to the step S815, the vehicle driving assistance apparatus 10 determines whether the minimum vehicle speed variation amount condition C6 is satisfied.

When the vehicle driving assistance apparatus 10 determines "No" at the step S815, the vehicle driving assistance apparatus 10 proceeds with the process to a step S820 to execute or continue the first traveling speed control, similarly to the step S520 of the routine shown in FIG. 5. Next, the vehicle driving assistance apparatus 10 proceeds with the process to the step S395 of the routine shown in FIG. 3 to terminate the process of this routine once.

On the other hand, when the vehicle driving assistance apparatus 10 determines "Yes" at the step S815, the vehicle driving assistance apparatus 10 proceeds with the process to a step S825 to execute or continue the second traveling speed control, similarly to the step S525 of the routine shown in FIG. 5. At this time, if the first traveling speed control is executed, the first traveling speed control is cancelled and the second traveling speed control is executed. Next, the vehicle driving assistance apparatus 10 proceeds with the process to the step S395 of the routine shown in FIG. 3 to terminate the process of this routine once.

As described above, also in the present example, when a difference (target vehicle speed variation amount WVtgt) between the target lower limit speed Vtgt_min set based on the changed predetermined lower limit variation amount ΔVmin and the target upper limit speed Vtgt_max is smaller than a predetermined value (minimum vehicle speed variation amount WVmin), the first traveling speed control is cancelled and the second traveling speed control is executed.

It should be noted that, when the vehicle driving assistance apparatus 10 determines "No" at the step S805, the vehicle driving assistance apparatus 10 proceeds with the process to a step S830 to execute or continue the first traveling speed control. Next, the vehicle driving assistance apparatus 10 proceeds with the process to the step S395 of the routine shown in FIG. 3 to terminate the process of this routine once.

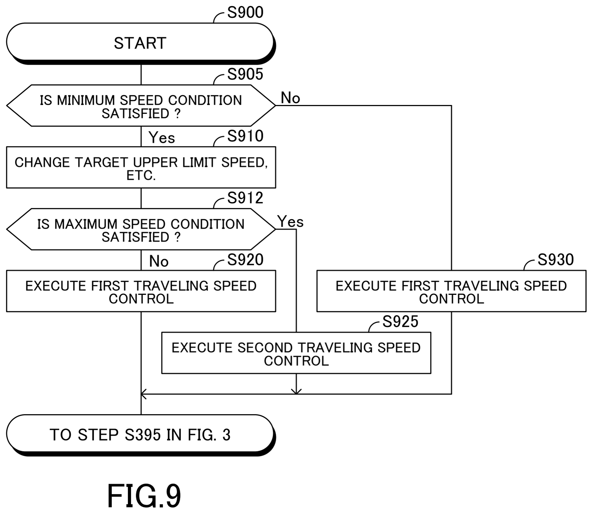

Alternatively, instead of the routine shown in FIG. 5, the routine shown in FIG. 9 may be executed. In this case, when the vehicle driving assistance apparatus 10 proceeds with the process to the step S320 of the routine shown in FIG. 3, the vehicle driving assistance apparatus 10 starts the process from a step S900 of the routine shown in FIG. 9. Then, the vehicle driving assistance apparatus 10 proceeds with the process to a step S905 to determine whether the minimum speed condition C5 is satisfied.

When the vehicle driving assistance apparatus 10 determines "Yes" at the step S905, the vehicle driving assistance apparatus 10 proceeds with the process to a step S910 to change the target upper limit speed Vtgt_max and the target lower limit speed Vtgt_min. Here, the target upper limit speed Vtgt_max and the target lower limit speed Vtgt_min are set similarly to the step S810 of the routine shown in FIG. 8.

As described above, also in the present example, when the target lower limit speed Vtgt_min is lower than the legal minimum speed Vlaw_min applied to the host vehicle 100 during execution of the first traveling speed control, the predetermined lower limit variation amount ΔVmin is changed such that the target lower limit speed Vtgt_min is equal to or higher than the legal minimum speed Vlaw_min.

Next, the vehicle driving assistance apparatus 10 proceeds with the process to a step S912 to determine whether the maximum speed condition C7 is satisfied.

When the vehicle driving assistance apparatus 10 determines "No" at the step S912, the vehicle driving assistance apparatus 10 proceeds with the process to a step S920 to execute or continue the first traveling speed control, similarly to the step S520 of the routine shown in FIG. 5. Next, the vehicle driving assistance apparatus 10 proceeds with the process to the step S395 of the routine shown in FIG. 3 to terminate the process of this routine once.

On the other hand, when the vehicle driving assistance apparatus 10 determines "Yes" at the step S912, the vehicle driving assistance apparatus 10 proceeds with the process to a step S925 to execute or continue the second traveling speed control, similarly to the step S525 of the routine shown in FIG. 5. At this time, if the first traveling speed control is executed, the first traveling speed control is cancelled and the second traveling speed control is executed. Next, the vehicle driving assistance apparatus 10 proceeds with the process to the step S395 of the routine shown in FIG. 3 to terminate the process of this routine once.

It should be noted that, when the vehicle driving assistance apparatus 10 determines "No" at the step S905, the vehicle driving assistance apparatus 10 proceeds with the process to a step S930 to execute or continue the first traveling speed control. Next, the vehicle driving assistance apparatus 10 proceeds with the process to the step S395 of the routine shown in FIG. 3 to terminate the process of this routine once.

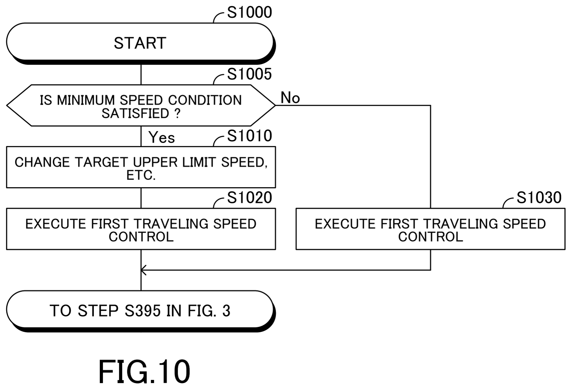

Alternatively, in place of the routine shown in FIG. 5, the routine shown in FIG. 10 may be executed. In this case, when the vehicle driving assistance apparatus 10 proceeds with the process to the step S320 of the routine shown in FIG. 3, the vehicle driving assistance apparatus 10 starts the process from a step S1000 of the routine shown in FIG. 10. Then, the vehicle driving assistance apparatus 10 proceeds with the process to a step S1005 to determine whether the minimum speed condition C5 is satisfied.

When the vehicle driving assistance apparatus 10 determines "Yes" at the step S1005, the vehicle driving assistance apparatus 10 proceeds with the process to a step S1010 to change the target upper limit speed Vtgt_max and the target lower limit speed Vtgt_min. Here, the target upper limit speed Vtgt_max and the target lower limit speed Vtgt_min are set similarly to the step S810 of the routine shown in FIG. 8.

Thus, also in the present example, when the target lower limit speed Vtgt_min is lower than the legal minimum speed Vlaw_min applied to the host vehicle 100 during execution of the first travel speed control, the predetermined lower limit variation amount ΔVmin is changed such that the target lower limit speed Vtgt_min is equal to or higher than the legal minimum speed Vlaw_min.

Next, the vehicle driving assistance apparatus 10 proceeds with the process to a step S1020 to execute or continue the first travel speed control similarly to the step S520 of the routine shown in FIG. 5. Then, the vehicle driving assistance apparatus 10 proceeds with the process to the step S395 of the routine shown in FIG. 3 to terminate the process of this routine once.

On the other hand, when the vehicle driving assistance apparatus 10 determines "No" at the step S1005, the vehicle driving assistance apparatus 10 proceeds with the process to a step S1030 to execute or continue the first travel speed control. Then, the vehicle driving assistance apparatus 10 proceeds with the process to the step S395 of the routine shown in FIG. 3 to terminate the process of this routine once.

Alternatively, the minimum speed condition C5 used at the step S805 of the routine shown in FIG. 8 may be a condition that is satisfied when the legal minimum speed Vlaw_min becomes higher and as a result, the target lower limit speed Vtgt_min becomes lower than the legal minimum speed Vlaw_min. Then, when the driver lowers the set vehicle speed Vset and as a result, the target lower limit speed Vtgt_min becomes lower than the legal minimum speed Vlaw_min, the vehicle driving assistance apparatus 10 may be configured to cancel the first travel speed control and execute the second travel speed control.

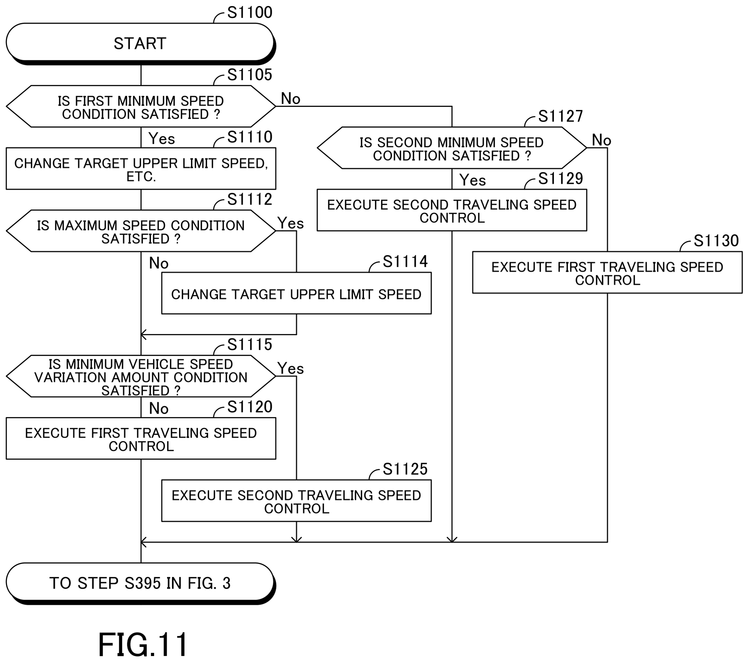

In this case, the routine shown in FIG. 8 is replaced with the routine shown in FIG. 11. In this case, when the vehicle driving assistance apparatus 10 proceeds with the process to the step S320 of the routine shown in FIG. 3, the vehicle driving assistance apparatus 10 starts the process from a step S1100 of the routine shown in FIG. 11. Then, the vehicle driving assistance apparatus 10 proceeds with the process to a step S1105 to determine whether a first minimum speed condition C51 is satisfied. The first minimum speed condition C51 is satisfied when the target lower limit speed Vtgt_min is lower than the legal minimum speed Vlaw_min due to the legal minimum speed Vlaw_min being changed to a higher speed.

When the vehicle driving assistance apparatus 10 determines "Yes" at the step S1105, the vehicle driving assistance apparatus 10 proceeds with the process to a step S1110 to change the target upper limit speed Vtgt_max and the target lower limit speed Vtgt_min. Here, the target upper limit speed Vtgt_max and the target lower limit speed Vtgt_min are set similarly to the step S810 of the routine shown in FIG. 8.

As described above, also in the present example, when the target lower limit speed Vtgt_min is lower than the legal minimum speed Vlaw_min applied to the host vehicle 100 during execution of the first travel speed control, the predetermined lower limit variation amount ΔVmin is changed such that the target lower limit speed Vtgt_min is equal to or higher than the legal minimum speed Vlaw_min.

Next, the vehicle driving assistance apparatus 10 proceeds with the process to a step S1112 to determine whether the maximum speed condition C7 is satisfied.

When the vehicle driving assistance apparatus 10 determines "No" at the step S1112, the vehicle driving assistance apparatus 10 proceeds with the process directly to a step S1115.

On the other hand, when the vehicle driving assistance apparatus 10 determines "Yes" at the step S1112, the vehicle driving assistance apparatus 10 proceeds with the process to a step S1114 to change the target upper limit speed Vtgt_max. Here, the target upper limit speed Vtgt_max is set similarly to the step S812 of the routine shown in FIG. 8. Next, the vehicle driving assistance apparatus 10 proceeds with the process to the step S1115.

When the vehicle driving assistance apparatus 10 proceeds with the process to the step S1115, the vehicle driving assistance apparatus 10 determines whether the minimum vehicle speed variation amount condition C6 is satisfied.

When the vehicle driving assistance apparatus 10 determines "No" at the step S1115, the vehicle driving assistance apparatus 10 proceeds with the process to a step S1120 to execute or continue the first travel speed control similarly to the step S520 of the routine shown in FIG. 5. Then, the vehicle driving assistance apparatus 10 proceeds with the process to the step S395 of the routine shown in FIG. 3 to terminate the process of this routine once.

On the other hand, when the vehicle driving assistance apparatus 10 determines "Yes" at the step S1115, the vehicle driving assistance apparatus 10 proceeds with the process to a step S1125 to execute or continue the second travel speed control similarly to the step S525 of the routine shown in FIG. 5. At this time, when the first travel speed control is executed, the first travel speed control is cancelled and the second travel speed control is executed. Next, the vehicle driving assistance apparatus 10 proceeds with the process to the step S395 of the routine shown in FIG. 3 to terminate the process of this routine once.

As described above, also in the present example, when a difference (target vehicle speed variation amount WVtgt) between the target lower limit speed Vtgt_min set based on the changed predetermined lower limit variation amount ΔVmin and the target upper limit speed Vtgt_max is smaller than a predetermined value (minimum vehicle speed variation amount WVmin), the first travel speed control is cancelled and the second travel speed control is executed.

Further, when the vehicle driving assistance apparatus 10 determines "No" at the step S1105, the vehicle driving assistance apparatus 10 proceeds with the process to a step S1127 to determine whether a second minimum speed condition C52 is satisfied. The second minimum speed condition C52 is satisfied when the target lower limit speed Vtgt_min is lower than the legal minimum speed Vlaw_min due to the set vehicle speed Vset being changed to a lower speed.

When the vehicle driving assistance apparatus 10 determines "Yes" at the step S1127, the vehicle driving assistance apparatus 10 proceeds with the process to a step S1129 to execute or continue the second travel speed control similarly to the step S525 of the routine shown in FIG. 5. At this time, when the first travel speed control is executed, the first travel speed control is cancelled and the second travel speed control is executed. Next, the vehicle driving assistance apparatus 10 proceeds with the process to the step S395 of the routine shown in FIG. 3 to terminate the process of this routine once.

On the other hand, when the vehicle driving assistance apparatus 10 determines "No" at the step S1127, the vehicle driving assistance apparatus 10 proceeds with the process to a step S1130 to execute or continue the first travel speed control. Then, the vehicle driving assistance apparatus 10 proceeds with the process to the step S395 of the routine shown in FIG. 3 to terminate the process of this routine once.

Similarly, the minimum speed condition C5 used at the step S905 of the routine shown in FIG. 9 and the step S1005 of the routine shown in FIG. 10 may be replaced with the first minimum speed condition C51. Then, when the driver lowers the set vehicle speed Vset and as a result, the target lower limit speed Vtgt_min becomes lower than the legal minimum speed Vlaw_min, the vehicle driving assistance apparatus 10 may be configured to cancel the first travel speed control and execute the second travel speed control.

Similarly, the minimum speed condition C5 used at the step S505 of the routine shown in FIG. 5 may be replaced with the first minimum speed condition C51. Then, when the driver lowers the set vehicle speed Vset and as a result, the target lower limit speed Vtgt_min becomes lower than the legal minimum speed Vlaw_min, the vehicle driving assistance apparatus 10 may be configured to cancel the first travel speed control and execute the second travel speed control.

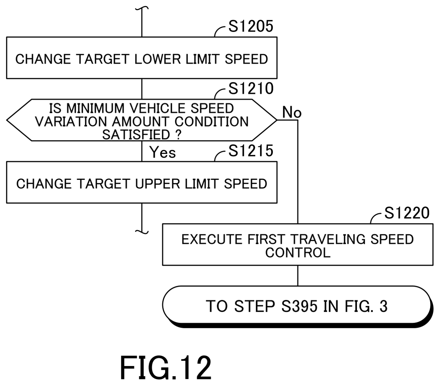

Also, in place of the process at the step S810 of the routine shown in FIG. 8, the processes shown in FIG. 12 may be executed. In this case, when the vehicle driving assistance apparatus 10 determines "Yes" at the step S805 of the routine shown in FIG. 8, the vehicle driving assistance apparatus 10 proceeds with the process to a step S1205 of the routine shown in FIG. 12 to change the target lower limit speed Vtgt_min. Here, the target lower limit speed Vtgt_min is set similarly to the step S510 of the routine shown in FIG. 5.

Next, the vehicle driving assistance apparatus 10 proceeds with the process to a step S1210 to determine whether the minimum vehicle speed variation amount condition C6 is satisfied.

When the vehicle driving assistance apparatus 10 determines "Yes" at the step S1210, the vehicle driving assistance apparatus 10 proceeds with the process to a step S1215 to change the target upper limit speed Vtgt_max. Here, a value obtained by adding the target vehicle speed variation amount WVtgt to the legal minimum speed Vlaw_min is set as the target upper limit speed Vtgt_max (Vtgt_max = Vlaw_min + WVtgt). It should be noted that, at the step S1215, the target lower limit speed Vtgt_min is not changed.

Next, the vehicle driving assistance apparatus 10 proceeds with the process to the step S812 of the routine shown in FIG. 8.

On the other hand, when the vehicle driving assistance apparatus 10 determines "No" at the step S1210, the vehicle driving assistance apparatus 10 proceeds with the process to a step S1220 to execute or continue the first travel speed control similarly to the step S520 of the routine shown in FIG. 5. Then, the vehicle driving assistance apparatus 10 proceeds with the process to the step S395 of the routine shown in FIG. 3 to terminate the process of this routine once.

As described above, in the present example, when a difference (target vehicle speed variation amount WVtgt) between the target lower limit speed Vtgt_min set based on the changed predetermined lower limit variation amount ΔVmin and the target upper limit speed Vtgt_max is smaller than a predetermined value (minimum vehicle speed variation amount WVmin), the predetermined upper limit variation amount ΔVmax is changed such that the above difference (target vehicle speed variation amount WVtgt) becomes equal to or greater than a predetermined value (minimum vehicle speed variation amount WVmin) within a range in which the target upper limit speed Vtgt_max is maintained at a speed equal to or lower than the legal maximum speed Vlaw_max.

Similarly, in place of the processes at the step S910 of the routine shown in FIG. 9, the step S1010 of the routine shown in FIG. 10, and the step S1110 of the routine shown in FIG. 11, the processes shown in FIG. 12 may be executed.

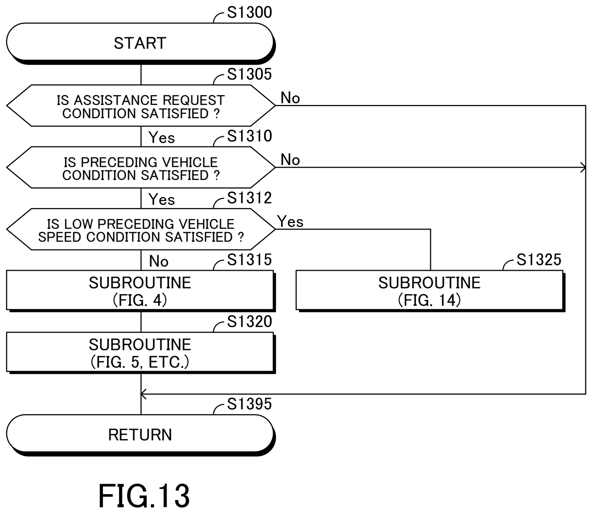

Further, the vehicle driving assistance apparatus 10 starts the process from a step S1300 of the routine shown in FIG. 13 at a predetermined timing. Then, the vehicle driving assistance apparatus 10 proceeds with the process to a step S1305 to determine whether the assistance request condition C1 is satisfied.

When the vehicle driving assistance apparatus 10 determines "Yes" at the step S1305, the vehicle driving assistance apparatus 10 proceeds with the process to a step S1310 to determine whether the preceding vehicle condition C2 is satisfied.

When the vehicle driving assistance apparatus 10 determines "Yes" at the step S1310, the vehicle driving assistance apparatus 10 proceeds with the process to a step S1312 to determine whether a low preceding vehicle speed condition C8 is satisfied.

The low preceding vehicle speed condition C8 is satisfied when a preceding vehicle speed V2 is lower than the set vehicle speed Vset. For example, the low preceding vehicle speed condition C8 is satisfied when the host vehicle 100 travels on a congested road. The preceding vehicle speed V2 is the travel speed of the preceding vehicle 200. The preceding vehicle speed V2 is acquired from the surrounding information IS.

Alternatively, the low preceding vehicle speed condition C8 may be satisfied when the preceding vehicle speed V2 is lower than an average host vehicle speed Vave. The average host vehicle speed Vave is an average value of the host vehicle speed V1 realized by the first inter-vehicle distance control. In the present example, the average host vehicle speed Vave is one-half of the sum of the current target upper limit speed Vtgt_max and the target lower limit speed Vtgt_min (Vave = (Vtgt_max + Vtgt_min)/2).

When the vehicle driving assistance apparatus 10 determines "No" at the step S1312, the vehicle driving assistance apparatus 10 proceeds with the process to a step S1315 to execute the routine shown in FIG. 4. Then, the vehicle driving assistance apparatus 10 proceeds with the process to a step S1320 to execute any one of the routines shown in FIG. 5 and FIG. 8 to FIG. 11. Then, the vehicle driving assistance apparatus 10 proceeds with the process to a step S1395 to terminate the process of this routine once.

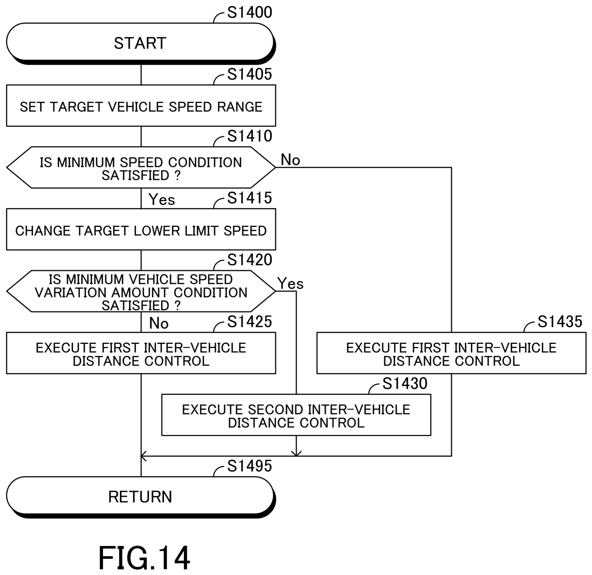

On the other hand, when the vehicle driving assistance apparatus 10 determines "Yes" at the step S1312, the vehicle driving assistance apparatus 10 proceeds with the process to a step S1325 to execute the routine shown in FIG. 14. Accordingly, when the vehicle driving assistance apparatus 10 proceeds with the process to the step S1325, the vehicle driving assistance apparatus 10 starts the process from a step S1400 of the routine shown in FIG. 14. Then, the vehicle driving assistance apparatus 10 proceeds with the process to a step S1405 to set the target vehicle speed range RVtgt.

At the step S1405, the target vehicle speed range RVtgt is set by setting the target upper limit speed Vtgt_max and the target lower limit speed Vtgt_min as follows.

That is, the vehicle driving assistance apparatus 10 sets, as the target upper limit speed Vtgt_max, a value obtained by adding one-half of the target vehicle speed variation amount WVtgt to the preceding vehicle speed V2 (Vtgt_max = V2 + WVtgt/2). In other words, the vehicle driving assistance apparatus 10 sets, as the target upper limit speed Vtgt_max, a value obtained by adding one-half of the sum of the predetermined upper limit variation amount ΔVmax and the predetermined lower limit variation amount ΔVmin to the preceding vehicle speed V2 (Vtgt_max = V2 + (ΔVmax + ΔVmin)/2).

Further, the vehicle driving assistance apparatus 10 sets, as the target lower limit speed Vtgt_min, a value obtained by subtracting one-half of the target vehicle speed variation amount WVtgt from the preceding vehicle speed V2 (Vtgt_min = V2 - WVtgt/2). In other words, the vehicle driving assistance apparatus 10 sets, as the target lower limit speed Vtgt_min, a value obtained by subtracting one-half of the sum of the predetermined upper limit variation amount ΔVmax and the predetermined lower limit variation amount ΔVmin from the preceding vehicle speed V2 (Vtgt_min = V2 - (ΔVmax + ΔVmin)/2).

Then, the vehicle driving assistance apparatus 10 sets, as the target vehicle speed variation amount WVtgt, the range defined by the target upper limit speed Vtgt_max and the target lower limit speed Vtgt_min.

Next, the vehicle driving assistance apparatus 10 proceeds with the process to a step S1410 to determine whether the minimum speed condition C5 is satisfied.

When the vehicle driving assistance apparatus 10 determines "Yes" at the step S1410, the vehicle driving assistance apparatus 10 proceeds with the process to a step S1415 to change the target lower limit speed Vtgt_min to a speed equal to or greater than the legal minimum speed Vlaw_min, similarly to the step S510 of the routine shown in FIG. 5.

As described above, also in the present example, when the target lower limit speed Vtgt_min is lower than the legal minimum speed Vlaw_min applied to the host vehicle 100 during execution of the first travel speed control, the predetermined lower limit variation amount ΔVmin is changed such that the target lower limit speed Vtgt_min is equal to or greater than the legal minimum speed Vlaw_min.

Next, the vehicle driving assistance apparatus 10 proceeds with the process to a step S1420 to determine whether the minimum vehicle speed variation amount condition C6 is satisfied.

When the vehicle driving assistance apparatus 10 determines "No" at the step S1420, the vehicle driving assistance apparatus 10 proceeds with the process to a step S1425 to execute or continue the first inter-vehicle distance control similarly to the step S520 of the routine shown in FIG. 5. Then, the vehicle driving assistance apparatus 10 proceeds with the process to a step S1495 to terminate the process of this routine once.

As described above, in the present example, the execution of the first inter-vehicle distance control (in particular, the coasting control) is permitted at least when the preceding vehicle speed V2 is equal to or greater than a value obtained by adding one-half of the target vehicle speed variation amount WVtgt to the legal minimum speed Vlaw_min (V2 ≥ Vlaw_min + WVtgt/2).

Further, in the present example, the execution of the first inter-vehicle distance control (in particular, the coasting control) is permitted when the preceding vehicle speed V2 is equal to or greater than a value obtained by adding one-half of the minimum vehicle speed variation amount WVmin to the legal minimum speed Vlaw_min (V2 ≥ Vlaw_min + WVmin/2).

On the other hand, when the vehicle driving assistance apparatus 10 determines "Yes" at the step S1420, the vehicle driving assistance apparatus 10 proceeds with the process to a step S1430 to execute or continue the second inter-vehicle distance control similarly to the step S525 of the routine shown in FIG. 5. At this time, when the first inter-vehicle distance control is executed, the first inter-vehicle distance control is cancelled and the second inter-vehicle distance control is executed. Then, the vehicle driving assistance apparatus 10 proceeds with the process to the step S1495 to terminate the process of this routine once.

As described above, in the present example, the execution of the first inter-vehicle distance control (in particular, the coasting control) is prohibited when the preceding vehicle speed V2 is lower than a value obtained by adding one-half of the minimum vehicle speed variation amount WVmin to the legal minimum speed Vlaw_min (V2 < Vlaw_min + WVmin/2).

Further, in the present example, when a difference (target vehicle speed variation amount WVtgt) between the target lower limit speed Vtgt_min set based on the changed predetermined lower limit variation amount ΔVmin and the target upper limit speed Vtgt_max is smaller than a predetermined value (minimum vehicle speed variation amount WVmin), the first inter-vehicle distance control is cancelled and the second inter-vehicle distance control is executed.

Further, in the present example, when the preceding vehicle speed V2 is lower than the set vehicle speed Vset, when a value obtained by subtracting the target lower limit speed Vtgt_min set based on the changed predetermined lower limit variation amount ΔVmin from the preceding vehicle speed V2 is smaller than a predetermined value (minimum vehicle speed variation amount WVmin) (V2 - Vtgt_min < WVmin), the first inter-vehicle distance control is cancelled and the second inter-vehicle distance control is executed.

Further, in the present example, when a value obtained by subtracting the changed target lower limit speed Vtgt_min from the target upper limit speed Vtgt_max is smaller than a predetermined value (minimum vehicle speed variation amount WVmin) (Vtgt_max - Vtgt_min < WVmin), the first inter-vehicle distance control is cancelled and the second inter-vehicle distance control is executed.

When the vehicle driving assistance apparatus 10 determines "No" at the step S1410, the vehicle driving assistance apparatus 10 proceeds with the process to a step S1425 to execute or continue the first inter-vehicle distance control. Then, the vehicle driving assistance apparatus 10 proceeds with the process to the step S1495 to terminate the process of this routine once.

It should be noted that, when the vehicle driving assistance apparatus 10 determines "No" at the step S1305 or the step S1310 of the routine shown in FIG. 13, the vehicle driving assistance apparatus 10 proceeds with the process directly to the step S1395 to terminate the process of this routine once.

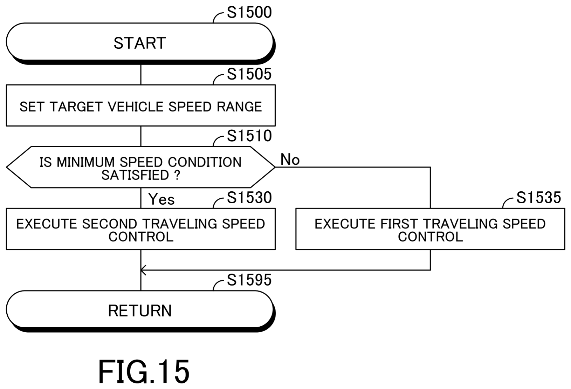

It should be noted that, instead of the routine shown in FIG. 14, the routine shown in FIG. 15 may be executed. In this case, when the vehicle driving assistance apparatus 10 proceeds with the process to the step S1325 of the routine shown in FIG. 13, the vehicle driving assistance apparatus 10 starts the process from a step S1500 of the routine shown in FIG. 15. Then, the vehicle driving assistance apparatus 10 proceeds with the process to a step S1505 to set the target vehicle speed range RVtgt, similarly to the step S1405 of the routine shown in FIG. 14.

Next, the vehicle driving assistance apparatus 10 proceeds with the process to a step S1510 to determine whether the minimum speed condition C5 is satisfied.

When the vehicle driving assistance apparatus 10 determines "Yes" at the step S1510, the vehicle driving assistance apparatus 10 proceeds with the process to a step S1530 to execute or continue the second inter-vehicle distance control similarly to the step S525 of the routine shown in FIG. 5. At this time, when the first inter-vehicle distance control is executed, the first inter-vehicle distance control is cancelled and the second inter-vehicle distance control is executed. Then, the vehicle driving assistance apparatus 10 proceeds with the process to a step S1595 to terminate the process of this routine once.

As described above, in the present example, the execution of the first inter-vehicle distance control (in particular, the coasting control) is prohibited when the preceding vehicle speed V2 is lower than a value obtained by adding one-half of the target vehicle speed variation amount WVtgt to the legal minimum speed Vlaw_min (V2 < Vlaw_min + WVtgt/2).

On the other hand, when the vehicle driving assistance apparatus 10 determines "No" at the step S1510, the vehicle driving assistance apparatus 10 proceeds with the process to a step S1535 to execute or continue the first inter-vehicle distance control. Then, the vehicle driving assistance apparatus 10 proceeds with the process to the step S1595 to terminate the process of this routine once.

As described above, in the present example, the execution of the first inter-vehicle distance control (in particular, the coasting control) is permitted when the preceding vehicle speed V2 is equal to or greater than a value obtained by adding one-half of the target vehicle speed variation amount WVtgt to the legal minimum speed Vlaw_min (V2 ≥ Vlaw_min + WVtgt/2).

It should be noted that the present invention is not limited to the aforementioned embodiments, and various modifications can be employed within the scope of the present invention.

## Claims

1. A vehicle driving assistance apparatus (10) comprising an electronic control unit (90) configured to execute a first driving assistance control of causing a host vehicle (100) to travel by autonomously repeating powering and coasting of the host vehicle (100) alternately such that a traveling speed of the host vehicle (100) is maintained within a range between a target upper limit speed and a target lower limit speed,
wherein the electronic control unit (90) is configured to:
set a speed obtained by adding a predetermined upper limit variation amount to a set vehicle speed as the target upper limit speed, the set vehicle speed being set as a target value of the traveling speed of the host vehicle (100); and
set a speed obtained by subtracting a predetermined lower limit variation amount from the set vehicle speed as the target lower limit speed; and
when the target lower limit speed is lower than a legal minimum speed applied to the host vehicle (100) during execution of the first driving assistance control, change the predetermined lower limit variation amount such that the target lower limit speed is equal to or higher than the legal minimum speed.

2. The vehicle driving assistance apparatus (10) according to claim 1,
wherein the electronic control unit (90) is configured to:
when a difference between the target upper limit speed and the target lower limit speed set by the changed predetermined lower limit variation amount is smaller than a predetermined value,
cancel the first driving assistance control; and
execute a second driving assistance control of causing the host vehicle (100) to travel by autonomously performing acceleration and deceleration of the host vehicle (100) such that the traveling speed of the host vehicle (100) is maintained at the set vehicle speed or a distance between the host vehicle (100) and a preceding vehicle (200) is maintained at a predetermined distance.

3. The vehicle driving assistance apparatus (10) according to claim 1,
wherein the electronic control unit (90) is configured to:
when a difference between the target upper limit speed and the target lower limit speed set by the changed predetermined lower limit variation amount is smaller than a predetermined value,
change the predetermined upper limit variation amount such that the difference is equal to or greater than the predetermined value within a range in which the target upper limit speed is maintained at a speed equal to or lower than a legal maximum speed.

4. The vehicle driving assistance apparatus (10) according to claim 1,
wherein the electronic control unit (90) is configured to:
when a traveling speed of a preceding vehicle (200) is lower than the set vehicle speed, and a value obtained by subtracting the target lower limit speed set by the changed predetermined lower limit variation amount from the traveling speed of the preceding vehicle (200) is smaller than a predetermined value,
cancel the first driving assistance control; and
execute a second driving assistance control of causing the host vehicle (100) to travel by autonomously performing acceleration and deceleration of the host vehicle (100) such that the traveling speed of the host vehicle (100) is maintained at the set vehicle speed or a distance between the host vehicle (100) and the preceding vehicle (200) is maintained at a predetermined distance.

5. The vehicle driving assistance apparatus (10) according to claim 1,
wherein the electronic control unit (90) is configured to:
when a traveling speed of a preceding vehicle (200) is lower than an average value of the traveling speed of the host vehicle (100) realized by the first driving assistance control,
set a value obtained by adding one-half of a sum of the predetermined upper limit variation amount and the predetermined lower limit variation amount to the traveling speed of the preceding vehicle (200) as the target upper limit speed; and
set a value obtained by subtracting one-half of the sum from the traveling speed of the preceding vehicle (200) as the target lower limit speed,
wherein the electronic control unit (90) is configured to change the target lower limit speed such that the target lower limit speed is equal to or higher than the legal minimum speed when the traveling speed of the preceding vehicle (200) is lower than the average value and the target lower limit speed is lower than the legal minimum speed during execution of the first driving assistance control, and
wherein the electronic control unit (90) is configured to:
when a value obtained by subtracting the changed target lower limit speed from the target upper limit speed is smaller than a predetermined value,
cancel the first driving assistance control; and
execute a second driving assistance control of causing the host vehicle (100) to travel by autonomously performing acceleration and deceleration of the host vehicle (100) such that the traveling speed of the host vehicle (100) is maintained at the set vehicle speed or a distance between the host vehicle (100) and the preceding vehicle (200) is maintained at a predetermined distance.

6. The vehicle driving assistance apparatus (10) according to claim 1,
wherein the electronic control unit (90) is configured to determine a variation amount used to change the predetermined lower limit variation amount based on the legal minimum speed acquired from information on the legal minimum speed during execution of the first driving assistance control, the information on the legal minimum speed being included in information on a road on which the host vehicle (100) travels.
